(19) Europäisches Patentamt
European Patent Office
Office européen des brevets

(11) **EP 3 830 564 B1**

(12) **FASCICULE DE BREVET EUROPEEN**

(45) Date de publication et mention de la délivrance du brevet:
**17.08.2022 Bulletin 2022/33**

(51) Classification Internationale des Brevets (IPC):
**G01N 21/17** (2006.01)   **G01N 29/14** (2006.01)
**G01N 29/24** (2006.01)   *G01N 21/39* (2006.01)

(21) Numéro de dépôt: **19744702.2**

(52) Classification Coopérative des Brevets (CPC):
**G01N 21/1702; G01N 29/14; G01N 29/2425;**
G01N 21/39; G01N 2021/1704; G01N 2291/021

(22) Date de dépôt: **25.07.2019**

(86) Numéro de dépôt international:
**PCT/EP2019/070028**

(87) Numéro de publication internationale:
**WO 2020/025437 (06.02.2020 Gazette 2020/06)**

(54) **CAPTEUR DE GAZ PHOTOACOUSTIQUE UTILISANT UNE METHODE DE MODULATION DE LA LONGUEUR D'ONDE D'ILLUMINATION**

PHOTOAKUSTISCHER GASSENSOR, WELCHER EIN MODULATIONSVERFAHREN DER BELEUCHTUNGSWELLENLÄNGE VERWENDET

PHOTOACOUSTIC GAS SENSOR USING A METHOD OF ILLUMINATION WAVELENGTH MODULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2018 FR 1857314**

(43) Date de publication de la demande:
**09.06.2021 Bulletin 2021/23**

(73) Titulaire: **Mirsense**
**91120 Palaiseau (FR)**

(72) Inventeurs:
• **CARRAS, Mathieu**
  **94250 GENTILLY (FR)**
• **AOUST, Guillaume**
  **91300 MASSY (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2008/026183   WO-A2-2014/132046**
**US-B1- 6 552 792**

• **SCHILT S ET AL: "Wavelength modulation photoacoustic spectroscopy: Theoretical description and experimental results", INFRARED PHYSICS AND TECHNOLOGY, ELSEVIER SCIENCE, GB, vol. 48, no. 2, 1 juin 2006 (2006-06-01), pages 154-162, XP028073911, ISSN: 1350-4495, DOI: 10.1016/J.INFRARED.2005.09.001 [extrait le 2006-06-01]**

## Description

## Domaine technique

La présente invention concerne les capteurs de gaz photoacoustiques.

## Etat de l'art

La spectroscopie photo-acoustique (PA) est une technique d'analyse qualitative et quantitative permettant de déterminer la composition de différents matériaux solides, liquides et les gaz. La technique repose sur l'interaction d'un rayonnement laser avec un matériau, ladite interaction permettant de générer une onde acoustique qui est ensuite analysée afin de caractériser le matériau étudié. Cette technique est particulièrement adaptée à la détection de gaz à l'aide de sources monochromatiques, compte tenu de la sélectivité naturelle du spectre d'absorption à raies des atomes de gaz. Le fort développement des sources lasers infrarouges compactes au cours de la dernière décennie (diodes lasers par exemple) a transformé la détection de gaz par PA en une solution robuste, compacte et simple. L'analyse de gaz par PA nécessite une source laser impulsionnelle ou continue et modulée en intensité et/ou en longueur d'onde, une cellule formant un résonateur acoustique contenant le gaz à analyser et un microphone de détection. L'effet PA dans la détection de gaz peut être séparé en 4 étapes : (1) le rayonnement laser est absorbé par le gaz excitant ainsi les niveaux d'énergies rotationnels, électroniques et vibrationnels; (2) Dans le cas d'excitations ro-vibrationnelles le gaz va se désexciter préférentiellement par collisions moléculaires qui vont se traduire par un transfert d'énergie de rotation/vibration et énergie cinétique créant un chauffage localisé du gaz. L'émission radiative n'est pas prédominante dans le cas d'excitations ro-vibrationnelles à cause de la grande durée de vie des niveaux radiatifs ro-vibrationnels comparés à ceux non-radiatifs dans les pressions habituellement utilisées en PA (~1 bar). En pratique, l'énergie absorbée par le gaz est complètement transférée sous la forme de chaleur par translation d'énergie cinétique dans les atomes de gaz ; (3) génération d'une onde acoustique et d'une onde thermique provoquée par l'expansion due au chauffage du gaz ; (4) détection par le microphone du signal acoustique. L'amplitude de vibration du microphone est représentative de la concentration du gaz et la longueur d'onde du rayonnement laser absorbée par le gaz indique sa composition.

Dans la grande majorité des cas, dans l'analyse de gaz, le signal PA produit par l'interaction entre le laser et le gaz étudié est amplifié avant détection par l'utilisation d'une cellule acoustique présentant une résonnante à une certaine fréquence. Bien évidemment, cela requiert que le signal PA soit généré à la même fréquence que la fréquence de résonance de la cellule. Pour cela, il est connu de moduler l'amplitude du rayonnement laser à la fréquence de résonance de la cellule, ce qui provoquera une modulation du signal PA à la même fréquence. Il existe de nombreuses formes de modulation d'amplitude du rayonnement laser qui sont séparées en deux catégories : la photoacoustique continue et la photoacoustique impulsionnelle.

La photoacoustique impulsionnelle utilise des sources optiques pulsées ou des sources continues avec un modulateur mécanique ou électro-optique externe ; voir par exemple l'article de Ellen L. Holthoff, Logan S. Marcus et Paul M. Pellegrino « Photoacoustic Spectroscopy for Trace Vapor Détection and Standoff Détection of Explosives » Chemical, Biological, Radiological, Nuclear, and Explosives (CBRNE) Sensing XVII (Vol. 9824, p. 98240R). International Society for Optics and Photonics. Afin de générer un signal PA à la fréquence de résonnance de la cellule, il est connu d'utiliser des sources fonctionnant en régime d'ondes quasi-continues (ou QCW pour Quasi Continuous Wave). Dans ce cas, l'amplitude du laser est modulée à une fréquence dite fréquence de répétition très supérieure à celle de la résonnance de la cellule, de sorte que le rayonnement laser apparaisse comme continu du point de vue de la fréquence de modulation correspondant à la résonance acoustique.

Cependant, la modulation d'amplitude, qu'elle soit en régime continue ou impulsionnelle, possède l'inconvénient de générer un signal acoustique produit par l'interaction entre le rayonnement laser et les parois de la cellule. En effet, cette interaction est susceptible d'apparaitre lors d'un désalignement des optiques du capteur de gaz provoqué par des chocs ou des vibrations. Or, l'amplitude du signal PA produit par ladite interaction est proportionnelle à l'amplitude du rayonnement laser. Ce qui signifie que l'amplitude de ce signal est modulée par la modulation de l'amplitude laser et il est donc généré à la même fréquence (fréquence de modulation). Ce signal photoacoustique est un son qui va s'additionner au signal PA provenant du gaz qui peut perturber la détermination de l'amplitude réelle de ce dernier et donc la détermination précise de la concentration du gaz étudié.

En photoacoustique, il est aussi connu de moduler la longueur d'onde du rayonnement laser comme le montrent J. Saarela et al, « Wavelength modulation waveforms in laser photoacoustic spectroscopy » Appl. Opt. 48, 743-747 (2009). Dans ce cas, on module la longueur d'onde laser autour d'un pic d'absorption du gaz étudié. La modulation de la longueur d'onde laser permet, en théorie, d'éviter que le bruit provenant de l'interaction entre le rayonnement laser et les parois de la cellule perturbe la détermination de la concentration du gaz étudié. En effet, le signal PA ainsi produit ne dépend pas ou très peu de la longueur d'onde car les parois sont des absorbeurs à large bande. Cela implique que l'amplitude du signal PA total provenant du gaz et des parois est uniquement déterminée par la concentration de l'espèce gazeuse étudié. Cependant, moduler la longueur d'onde implique souvent de faire varier l'intensité laser, ce qui entrainera l'apparition du signal PA parasite produit par l'interaction entre les parois de la cellule et le rayonnement laser. C'est le cas dans les lasers semiconducteurs où il est possible de faire varier la longueur d'onde du rayonnement laser en modifiant la température de la zone active du laser. On réalise cela en faisant varier le courant d'alimentation, qui va aussi entrainer une variation d'intensité laser. Par exemple, le document US 2018/0196012 A1 divulgue un système de spectroscopie photoacoustique impulsionnel utilisant une méthode de modulation de la longueur d'onde permettant de s'affranchir du bruit de fond par une mesure différentielle.

Un des buts de la présente invention est de pallier la difficulté précitée : des capteurs de gaz utilisant des méthodes de modulation du rayonnement laser générant des signaux acoustique parasites.

Afin de résoudre ce problème, l'invention propose un capteur de gaz photoacoustique utilisant une méthode de modulation de la longueur d'onde du rayonnement laser, ladite modulation étant obtenue par l'emploi judicieux d'un courant électrique pompant la ou les sources lasers.

RESUME

A cet effet, l'invention propose un capteur de gaz photo-acoustique comprenant :

-  une cellule formant un résonateur acoustique, comprenant un conduit d'entrée de gaz, un conduit de sortie de gaz et au moins une ouverture dite entrée laser ;

-  au moins une source laser à pompage électrique ;

-  au moins un transducteur électro-acoustique; et

-  un circuit d'alimentation générant un courant électrique impulsionnel, dit de génération, pompant la ou les sources lasers, configuré pour faire fonctionner le ou les sources lasers en mode impulsionnel, la fréquence de répétition des impulsions lasers étant au moins 10 fois, préférentiellement 100, encore préférentiellement 1000 fois supérieure à la fréquence de résonnance de la cellule ;

caractérisé en ce que le circuit d'alimentation est configuré pour générer en outre un courant dit de base prenant des valeurs non nulles entre des impulsions lasers (de préférence entre une majorité des impulsions, voire entre chacune d'entre elles) avec une intensité inférieure à l'intensité du courant de génération au cours des impulsions laser, le courant de base étant modulé en intensité de sorte que le ou les sources lasers émettent, dans la cellule, un rayonnement lumineux présentant une longueur d'onde variable de manière périodique autour d'une longueur d'onde centrale de manière à prendre, à des intervalles réguliers, une valeur spécifiquement adaptée à l'excitation d'un gaz à détecter, moyennant quoi une interaction entre le rayonnement lumineux et le gaz à détecter contenu dans la cellule induit la génération d'ondes acoustiques à une fréquence de résonance de la cellule, le transducteur électro-acoustique étant agencé de manière à être en contact avec les ondes acoustiques générées dans la cellule.

Des aspects préférés mais non limitatif du capteur de gaz selon l'invention sont les suivants :

la modulation du courant de base est sinusoïdale.
l'intensité du courant de base généré par le circuit d'alimentation est inférieure au seuil d'émission laser.
la modulation du courant de base est de type PWM (pour Pulse Width Modulation) ou de type PDM (Pulse Density Modulation).
le courant électrique de génération est modulé en intensité de manière à compenser une perte d'efficacité du ou des lasers produite par l'échauffement de la zone active du ou des lasers par le courant de base de manière à obtenir une intensité laser constante.
le courant de base est modulé périodiquement à une fréquence égale à la moitié de la fréquence de résonance de la cellule.

Le capteur comprend plusieurs sources lasers de longueurs d'ondes centrales différentes, adaptées à l'excitation de gaz différents.

le ou les sources lasers comprennent des lasers à cascade quantique émettant à des longueurs d'onde comprises entre 4 et 10 microns.

la durée des impulsions laser est inférieure à 100 ns.

Un autre objet de l'invention est un procédé de détection de gaz au moyen d'un capteur de gaz photoacoustique selon un des modes de réalisation précédent, comprenant :

-  une étape dans laquelle le circuit d'alimentation génère le courant de base entre chaque impulsion avec une intensité non nulle et inférieure à l'intensité du courant de génération au cours des impulsions laser et le courant de génération pompant la ou les lasers, configuré pour faire fonctionner le ou les lasers en mode impulsionnel, ledit courant de base étant modulé en intensité de sorte que ladite ou chaque dite source laser émette, dans la cellule formant un résonateur acoustique, un rayonnement lumineux présentant une longueur d'onde variable de manière périodique autour d'une longueur d'onde centrale de manière à prendre, à des intervalles réguliers, une valeur spécifiquement adaptée à l'excitation d'un gaz à détecter, le courant électrique de génération étant modulé de manière à compenser une perte d'efficacité du ou des lasers produite par l'échauffement de la zone active du ou des lasers par le courant de base de manière à obtenir une intensité laser constante ; et

- une étape de détection d'un signal photo-acoustique périodique, produit lors de l'interaction entre le gaz et le rayonnement laser, par le transducteur électro-acoustique du capteur.

Selon des modes de réalisation particuliers d'un tel procédé :

la fréquence de la variation périodique de la longueur d'onde laser est égale à la moitié de la fréquence de résonnance de la cellule.

le capteur de gaz comprend plusieurs sources lasers de longueurs d'ondes centrales différentes, adaptées à l'excitation de gaz différents.

le ou les sources lasers comprennent des lasers à cascade quantique émettant entre 4 et 10 microns.

BREVE DESCRIPTION DES DESSINS

Les avantages et caractéristiques de l'objet de la description apparaîtront à la lecture de la description, illustrée par les figures suivantes :

La figure 1 présente un schéma d'un capteur de gaz selon un premier mode de réalisation de la présente invention.

La figure 2 présente un schéma d'un capteur de gaz selon un deuxième mode de réalisation de la présente invention comprenant plusieurs sources lasers de longueurs d'ondes différentes.

La figure 3 présente un premier exemple de forme d'onde de courant alimentant la source laser utilisée dans le capteur du mode de réalisation la figure 1, permettant d'obtenir la modulation de la longueur d'onde du rayonnement laser.

La figure 4 présente un deuxième exemple de forme d'onde de courant alimentant la source laser permettant d'obtenir la modulation de la longueur d'onde du rayonnement laser.

La figure 5 présente un troisième exemple de forme d'onde de courant alimentant la source laser permettant d'obtenir la modulation de la longueur d'onde du rayonnement laser.

DESCRIPTION DETAILLEE

Sur les figures, les éléments identiques sont repérés par les mêmes références.

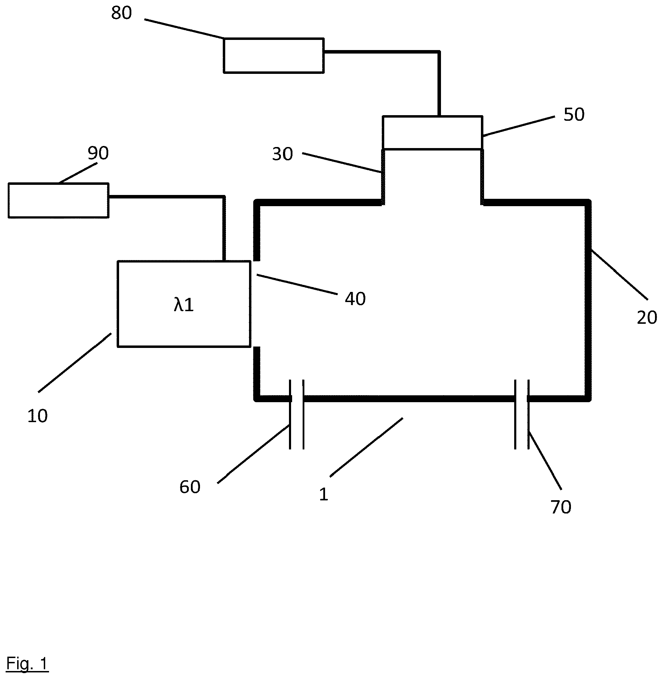

La figure 1 illustre un premier mode de réalisation d'un capteur de gaz photo-acoustique selon la présente description. Il comporte une cellule 20 comprenant un conduit d'entrée de gaz 60 et un conduit de sortie de gaz 70, une source laser 10, une cheminée 30 débouchant dans la cellule contenant un microphone de détection 50 et une ouverture dite entrée laser 40. L'entrée laser est une ouverture dans la cellule d'une dimension supérieure au diamètre du faisceau en entrée de cellule. Dans un autre mode de réalisation l'entrée laser n'est pas une ouverture au sens propre, mais une fenêtre d'entrée laser, c'est-à-dire une paroi transparente qui n'altère pas, ou de manière négligeable, les propriétés géométrique du faisceau au cours de sa propagation (ouverture optique). Dans ce cas encore la dimension de l'entrée laser est supérieure au diamètre du faisceau en entrée de cellule. Dans le mode de réalisation de la figure 1 la source laser 10 est accolée à l'entrée laser 40, de manière à ce que le rayonnement laser soit directement émis dans la cellule 20 sans interposition d'éléments optiques de focalisation. Dans le mode de réalisation de la figure 1 la source laser 10 comprend un résonateur laser, un circuit d'alimentation et de modulation 90 permettant d'ajuster la longueur d'onde laser en faisant varier le courant d'alimentation. Cette source laser peut, par exemple, fonctionner en régime impulsionnel à une fréquence très supérieure à la fréquence de résonnance de la cellule afin d'éviter d'éventuelles interférences. Le capteur comprend de plus un circuit électronique de détection 80 relié au microphone de détection 50. Dans le mode de réalisation de la figure 1, le gaz est introduit par un conduit d'entrée 60 et évacué par un conduit de sortie 70. Les deux conduits sont directement reliés à la cellule 20. Lors de l'interaction entre le laser et le gaz, au sein de la cellule 20, le gaz est excité. Les niveaux ro-vibrationnels excités vont se désexciter par des transitions non-radiatives entrainant des collisions moléculaires et un chauffage du gaz. Ainsi, des ondes acoustiques et thermiques sont générées et les ondes acoustiques vont être détectées par le microphone de détection 50 placé dans la cheminé 30 reliant le microphone 50 à la cellule 20. Le microphone est relié à un circuit de détection 80 qui permet de déterminer l'amplitude des ondes acoustiques et ainsi de remonter à la concentration de l'espèce gazeuse étudiée. La source laser étant placée directement devant la face d'entrée, ce mode de réalisation ne nécessite qu'un alignement rapide. De plus, ne pas utiliser d'élément optique de focalisation dans l'architecture du capteur permet de le rendre beaucoup plus résistant aux chocs et/ ou vibrations, moins sensible au désalignement et moins couteux. Cette architecture augmente donc sa durée de fonctionnement et son spectre d'application. Dans un autre mode de réalisation, le capteur comprend des optiques de focalisation qui permettent d'obtenir un faisceau laser collimaté, dirigé vers un absorbeur situé en regard des sources laser ; ce mode de réalisation minimise les interactions entre les faisceaux laser et les parois de la cavité.

Dans le mode de réalisation de la figure 1, le rayonnement laser est produit par un laser à cascade quantique (QCL en anglais) émettant en régime impulsionnel à 4 à 10 microns. Le laser QCL se présente sous la forme d'un barreau dont les dimensions typiques sont $3mm \times 10\mu m \times 20 \ \mu m$. Pour rendre la manipulation plus facile le laser QCL est soudé sur une embase parallélépipédique de dimension 5mmx6mmx1,2mm. La divergence du faisceau laser en sortie du barreau laser fait typiquement 60°. La source laser permet d'émettre, dans la cellule 20, un rayonnement lumineux à une longueur d'onde centrale spécifiquement adaptée à la génération de l'effet photo-acoustique dans le gaz à étudier. Dans ce mode de réalisation, la cellule possède une fréquence de résonnance acoustique autour de 2kHz. Le laser QCL fonctionne en régime quasi continu (ou QCW en anglais pour Quasi Continuous Wave) avec un taux de répétition de 1MHz avec des impulsions d'une durée de 100 ns. Ce mode de fonctionnement implique que le rayonnement laser apparait comme continu du point de vue de la fréquence de modulation de la longueur d'onde des QCL.

Le rayonnement laser n'étant pas focalisé au sein de la cellule, il va diverger et subir de multiples réflexions sur les parois de la cellule. L'absorption du rayonnement lumineux par les parois de la cellule va provoquer la génération d'un signal « de fond » acoustique dépendant majoritairement du matériau constituant la cellule et très peu dépendant de la longueur d'onde de la source laser car les parois sont des absorbeurs à large bande. Ce signal PA est un bruit qui s'ajoute au signal PA provenant du gaz et qui va être détecté par le microphone de détection. Il va donc perturber la détermination de l'amplitude du signal PA provenant du gaz étudié et donc la détermination de sa concentration. Il est donc important de le minimiser. Pour cela, dans le mode de réalisation de la figure 1, le capteur utilise une technique de modulation de la longueur d'onde à intensité constante. En effet, comme mentionné précédemment, le signal PA produit par l'interaction entre le laser et les parois de la cellule ne dépend quasiment pas de la longueur d'onde. L'amplitude de ce signal reste constante pendant la modulation de la longueur d'onde à intensité laser constante et l'amplitude de la modulation du signal acoustique total (gaz + parois) détecté par le microphone 50 est seulement due à la concentration de l'espèce gazeuse étudiée.

Le circuit d'alimentation génère donc un courant électrique adapté pour moduler la longueur d'onde du rayonnement laser tout en maintenant une intensité laser constante. Pour cela, le circuit d'alimentation génère un courant électrique dit « de génération » permettant de pomper électriquement la source laser. Le courant de génération est adapté pour faire fonctionner la source QCL en régime impulsionnel. L'émission lumineuse est obtenue par les impulsions de courant de génération (au-dessus du seuil d'émission du QCL). De plus, le circuit d'alimentation génère un courant électrique appelé « courant de base » entre chaque impulsion laser. L'intensité du courant de base est strictement inférieure au seuil d'émission de la source laser. Les deux courants sont modulés par deux enveloppes : une enveloppe « haute » qui module le courant de génération et une enveloppe « basse » qui module le courant de base. La modulation du courant de base permet de provoquer un échauffement de la zone active du laser, ce qui entraine une modulation de la longueur d'onde laser. La modulation du courant de génération permet de compenser la perte d'efficacité du laser produite par l'échauffement de la zone active du laser par le courant de base. L'effet combiné des modulations du courant de base et du courant de génération est de maintenir au moins approximativement constante l'intensité lumineuse des impulsions laser, alors même que leur longueur d'onde varie de manière périodique. La modulation du courant de génération permet donc de s'affranchir du couplage longueur/intensité laser. Dans le mode de réalisation de la figure 1, la modulation du courant de base est sinusoïdale et le courant de génération est un signal créneau modulé par une enveloppe triangulaire afin de compenser une perte d'efficacité du laser QCL produite par l'échauffement de la zone active du QCL. Le déphasage utilisé et la forme de l'enveloppe haute dans ce mode de réalisation sont donnés à titre d'exemple. Dans un autre mode de réalisation le déphasage est nul.

Comme le montre montrent J. Saarela et al,, "Wavelength modulation waveforms in laser photoacoustic spectroscopy," Appl. Opt. 48, 743-747 (2009), la forme de modulation à appliquer est préférentiellement ajustée au profil de la raie de gaz sondée. En effet, l'objectif est de maximiser le signal à l'harmonique de détection, c'est-à-dire la quantité suivante où P(t) désigne la puissance laser en fonction du temps, $\lambda(t)$ la longueur d'onde du laser en fonction du temps, $\alpha_G(\lambda)$ l'absorption du gaz d'intérêt en fonction de la longueur d'onde et f la fréquence de détection :

$$\int_{-\frac{1}{2f}}^{\frac{1}{2f}} P(t)\alpha_G\big(\lambda(t)\big) \exp(-2\pi fjt)\, dt$$

Toujours d'après Saarela et al., Applied Optics, 2009, et pour une raie de gaz isolée ($\alpha_G$ possède une forme de lorentzienne), la forme optimale est la forme quasi-carrée avec un indexe de modulation de 5.

Dans un autre mode de réalisation la modulation du courant de base est de type PDM (pour « pulse density modulation » en anglais). Ce type de modulation consiste à utiliser des impulsions de courant inférieures au seuil d'émission, toutes identiques et de largeur fixe, mais avec une fréquence de tir variables. Plus la densité de ces impulsions dans le temps sera importante (fréquence de tir élevée), plus l'énergie déposée par effet joule dans le laser sera importante, plus l'échauffement de la zone active sera important et donc plus la modulation de la longueur d'onde sera importante. A l'inverse, une densité d'impulsions faible entrainera une faible modulation de la longueur d'onde (ou une variation nulle).

Dans un mode de réalisation alternatif, la modulation du courant de base est de type PWM (pour « puise width modulation » en anglais), qui consiste à utiliser des impulsions de courant inférieures au seuil d'émission qui se répètent à une fréquence de tir fixe. D'une impulsion à l'autre, la largeur de l'impulsion varie de sorte que plus l'impulsion est longue, plus l'énergie déposée par effet joule dans le laser est importante et donc plus la longueur d'onde va être modulée. Inversement, une largeur d'impulsion faible entrainera une faible modulation de la longueur d'onde (ou une variation nulle).Le terme modulation du courant de base réfère donc ici indifféremment à une modulation d'un signal par une enveloppe (par exemple sinusoïdale) ou par un signal impulsionnel (par exemple par un signal PWM).

Afin d'amplifier le signal PA produit par l'interaction entre le rayonnement lumineux et le gaz à détecter contenu dans la cellule 20, les ondes acoustiques générées par effet photoacoustique doivent être à la fréquence de résonnance de la cellule. Pour cela, il faut que la modulation de la longueur d'onde du rayonnement lumineux produit par la source laser 10 soit réalisée autour d'un maximum d'absorption du gaz étudié, à une fréquence égale à la moitié de cette fréquence de résonnance. Ainsi, la période de la modulation du courant de génération et du courant de base est égale à l'inverse de la moitié de la fréquence de résonnance de la cellule. Dans le mode de réalisation de la figure 1, la raie d'absorption du gaz étudié est centrée en $\lambda_0$. La longueur d'onde centrale du QCL varie alors entre $\lambda_0 + \delta\lambda$ et $\lambda_0 - \delta\lambda$ à une fréquence de modulation égale à 1 kHz. L'interaction entre le laser et le gaz produit alors un signal photoacoustique sinusoïdal à une fréquence de 1 kHz. Enfin, l'amplitude de la modulation sinusoïdale du signal acoustique total (gaz + parois) détecté par le microphone permet la détermination de la concentration de l'espèce gazeuse étudiée. La fréquence de répétition des impulsions lasers est au moins 10 fois, préférentiellement 100, encore préférentiellement 1000 fois supérieure à la fréquence de résonnance de la cellule.

Il n'est pas nécessaire que le maximum d'absorption du gaz soit la valeur centrale de la plage de modulation de la longueur d'onde du rayonnement laser. Dans un autre mode de réalisation, le maximum d'absorption du gaz est une valeur extrémale de la plage de modulation. Dans ce cas, la période de la modulation du courant de génération et du courant de base est égale à l'inverse de la fréquence de résonnance de la cellule

Avantageusement, la durée des impulsions est choisie de manière à ce qu'elles soient suffisamment courtes pour que la largeur spectrale associée, créée par le chirp, ne dépasse pas la largeur typique d'une raie de gaz (de l'ordre de $0.5 cm^{-1}$ pour les raies de gaz isolées). On appelle ici « chirp » le changement rapide de la longueur d'onde au sein d'une impulsion provoqué par l'échauffement de la zone active du laser provoqué par le courant de base.

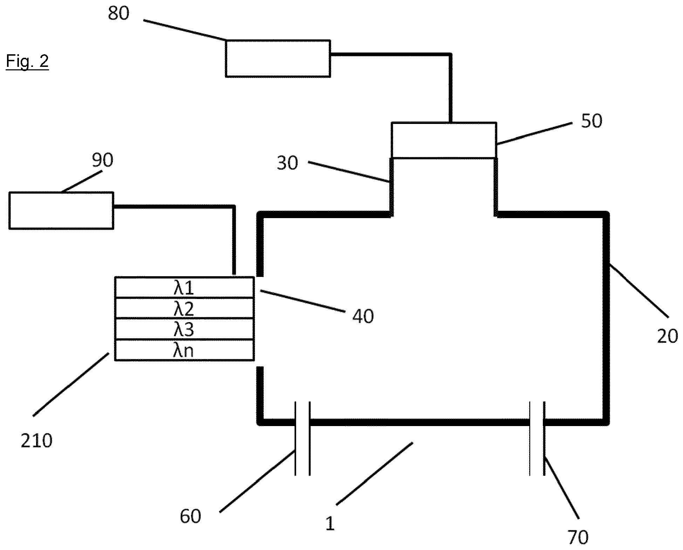

Dans le mode de réalisation de la figure 1, les parois internes de la cellule de gaz possède un traitement optique réfléchissant à l'IR afin de maximiser le flux laser qui interagit avec les atomes ou molécules gazeuses à étudier. La cellule possède, par exemple, un facteur de réflexion optique supérieur à 50% et préférentiellement supérieur à 75%. La figure 2 présente un autre mode de réalisation de capteur de gaz selon la présente description. Ici, un nombre n>1 de sources lasers 210 émettent un rayonnement lumineux dans la cellule 20. Chaque source laser possède une longueur d'onde centrale différente adaptée ($\lambda 1$, $\lambda 2$, $\lambda 3$ ... $\lambda n$) à l'excitation de gaz différents. Dans ce mode de réalisation les lasers sont des QCL émettant entre 4 et 10 microns fonctionnant en régime impulsionnel à une fréquence de 1 MHz. De plus, un circuit d'alimentation permet de faire varier la longueur d'onde des impulsions produites par les sources laser en faisant varier le courant de base des lasers tout en maintenant un intensité laser constante. Pour chaque source laser, il est donc possible de s'affranchir du bruit de fond produit par les réflexions du rayonnement laser sur les parois de la cellule. Le mode de réalisation de la figure 2 présente donc l'avantage de pouvoir caractériser différentes espèces gazeuses à l'aide des différentes longueurs d'ondes. En effet, la sélectivité naturelle de l'absorption par un gaz d'un rayonnement monochromatique laser permet de facilement remonter à l'espèce gazeuse étudiée.

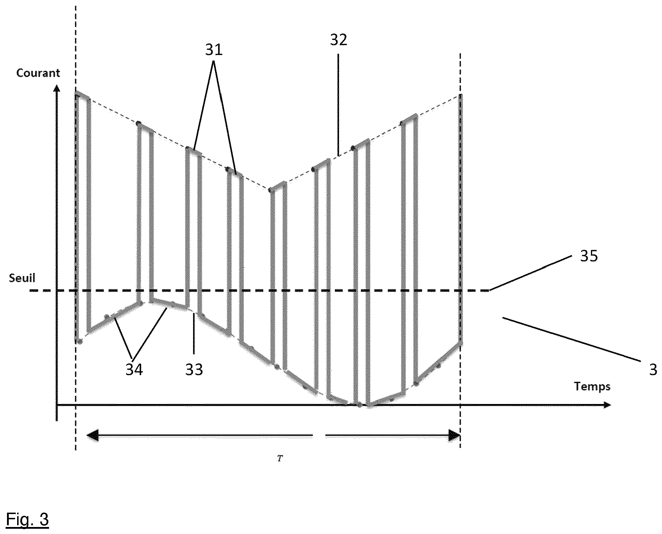

La figure 3 présente un mode de réalisation du courant électrique alimentant la source laser identique à celui implémenté dans le capteur décrit par le mode de réalisation de la figure 1. Ce graphe représente l'évolution de l'intensité du courant d'alimentation en fonction du temps. Comme détaillé précédemment, le courant possède deux enveloppes : une enveloppe « haute » 32 qui module le courant de génération 31 (générant les impulsions lasers) et une enveloppe « basse » 34 qui module le courant de base 33 entre chaque impulsion laser. Le seuil d'émission laser 35 est représenté par une droite horizontale en pointillé et l'intensité du courant de base 33 est strictement inférieure à ce seuil. Dans ce mode de réalisation, le courant de base est modulé par une sinusoïde dont la période $T$ est égale à l'inverse de la moitié de la fréquence de résonnance de la cellule, soit une période de 1 ms. Le courant de génération est modulé par une enveloppe haute triangulaire de même période que celle de la modulation du courant de base. Dans ce mode de réalisation les impulsions ont une durée de 100 ns avec un taux de répétition de 1MHz. La fréquence de résonnance de la cellule étant 2 kHz, le laser fonctionne en régime QCW. Cette largeur temporelle d'impulsion est suffisamment courte pour pouvoir négliger l'effet de chirp provoqué par l'échauffement de la zone active.

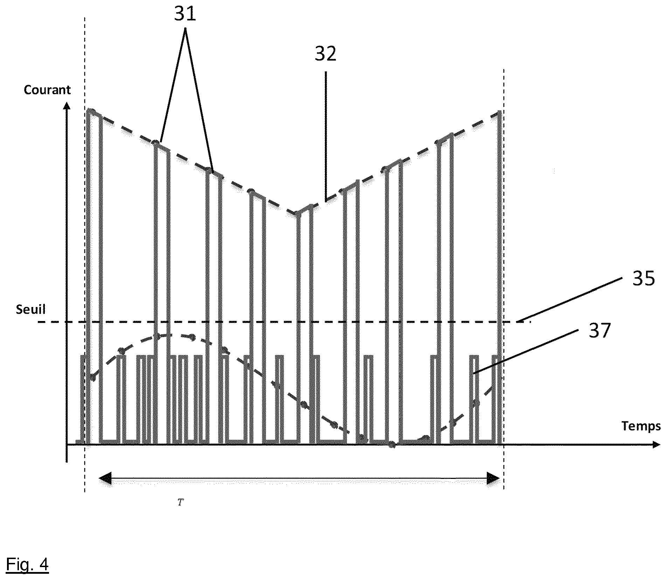

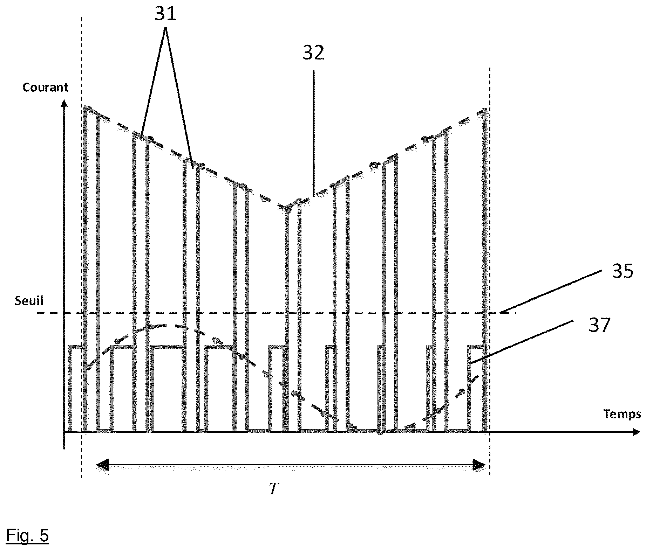

Dans le mode de réalisation de la figure 3, le courant de base présente une modulation continue de son intensité. Il est également possible d'utiliser un courant de base impulsionnel 37, modulé en densité d'impulsions (figure 4) ou en largeur d'impulsions (figure 5). Du point de vue de la réponse thermique du laser, qui effectue un filtrage passe-bas, ces modes de réalisation sont équivalents ; toutefois, du point de vue électronique, il peut être préférable de réaliser une modulation impulsionnelle du courant de base plutôt qu'une modulation d'intensité.

La source laser 10 n'est pas limitée aux QCLs. Dans un autre mode de réalisation le rayonnement laser est produit par des lasers pompés électriquement comme des lasers semi-conducteurs. Cependant, les lasers semi-conducteurs autres que les QCLs possèdent un seuil d'émission laser plus bas, ce qui limite la possibilité d'injecter un courant de base sous le seuil. De plus, cela implique que l'amplitude de la modulation du courant de base sera donc elle aussi plus faible, ce qui va limiter l'échauffement de la zone active et donc l'amplitude modulation de la longueur d'onde. La source laser utilisée sera donc préférentiellement une source QCL.

Dans un autre mode de réalisation les modulations des courants de base et de génération peuvent prendre d'autres formes que sinusoïdale et triangulaire respectivement. Elles peuvent prendre être de forme créneau, sinusoïdale, triangulaire ou toutes autres formes dessinées par l'homme du métier. Dans un autre mode de réalisation non préférentiel, le courant électrique de génération n'est pas modulé en intensité de manière à compenser une perte d'efficacité du ou des lasers produite par l'échauffement de la zone active du ou des lasers par le courant de base. En effet, la simple modulation périodique de la longueur d'onde par la modulation du courant de base permet une diminution de la contribution du signal bruité provenant des parois. Néanmoins, il est préférable de compenser une perte d'efficacité du ou des lasers de manière à obtenir une intensité laser constante et ainsi s'affranchir du bruit provenant de l'interaction laser avec les parois.

Dans un autre mode de réalisation non préférentiel, le courant de base généré par le circuit d'alimentation possède une intensité inférieure à l'intensité du courant de génération pendant les impulsions du laser, mais supérieur ou égale au seuil d'émission laser. Ce mode de réalisation est suffisant pour provoquer un échauffement de la zone active et une modulation de la longueur d'onde laser.

Dans d'autres modes de réalisation, le microphone de détection 50 peut être remplacé par tout autre transducteur électro-acoustique. Il peut par exemple être pré-résonnant (diapason). Dans un autre mode de réalisation, il peut être un transducteur acoustique-optique-électrique.

**Revendications**

1. Capteur de gaz photo-acoustique (1, 2) comprenant :

- une cellule (20) formant un résonateur acoustique, comprenant un conduit d'entrée de gaz, un conduit de sortie de gaz (70) et au moins une ouverture dite entrée laser (40);
- au moins une source laser (10) à pompage électrique ;
- au moins un transducteur électro-acoustique (50); et
- un circuit d'alimentation (90) générant un courant électrique impulsionnel, dit de génération (31), pompant la ou les sources lasers, configuré pour faire fonctionner le ou les sources lasers en mode impulsionnel, la fréquence de répétition des impulsions lasers étant au moins 10 fois, préférentiellement 100, encore préférentiellement 1000 fois supérieure à la fréquence de résonnance de la cellule.

**caractérisé en ce que** le circuit d'alimentation est configuré pour générer en outre un courant dit de base (34) prenant des valeurs non nulles entre des impulsions laser avec une intensité inférieure à l'intensité du courant de génération au cours des impulsions laser (35), le courant de base étant modulé en intensité de sorte que le ou les sources lasers émettent, dans la cellule, un rayonnement lumineux présentant une longueur d'onde variable de manière périodique autour d'une longueur d'onde centrale de manière à prendre, à des intervalles réguliers, une valeur spécifiquement adaptée à l'excitation d'un gaz à détecter, moyennant quoi une interaction entre le rayonnement lumineux et le gaz à détecter contenu dans la cellule induit la génération d'ondes acoustiques à une fréquence de résonance de la cellule, le transducteur électro-acoustique étant agencé de manière à être en contact avec les ondes acoustiques générées dans la cellule.

2. Capteur de gaz selon la revendication 1, dans lequel la modulation du courant de base est sinusoïdale.

3. Capteur de gaz selon l'une quelconque des revendications précédentes, dans lequel l'intensité du courant de base généré par le circuit d'alimentation est inférieure au seuil d'émission laser.

4. Capteur de gaz selon l'une quelconque des revendications précédentes, dans lequel la modulation du courant de base est de type PWM (pour Pulse Width Modulation) ou de type PDM (Pulse Density Modulation).

5. Capteur de gaz selon l'une quelconque des revendications précédentes, dans lequel le courant électrique de génération est modulé en intensité de manière à compenser une perte d'efficacité du ou des lasers produite par l'échauffement de la zone active du ou des lasers par le courant de base de manière à obtenir une intensité laser constante

6. Capteur de gaz l'une quelconque des revendications précédentes, dans lequel le courant de base est modulé périodiquement à une fréquence égale à la moitié de la fréquence de résonance de la cellule.

7. Capteur de gaz selon l'une quelconque des revendications précédentes, comprenant plusieurs sources lasers de longueurs d'ondes centrales différentes, adaptées à l'excitation de gaz différents.

8. Capteur de gaz selon l'une quelconque des revendications précédentes, dans lequel le ou les sources lasers comprennent des lasers à cascade quantique émettant à des longueurs d'onde comprises entre 4 et 10 microns.

9. Capteur de gaz selon l'une quelconque des revendications précédentes, dans laquelle la durée des impulsions laser est inférieure à 100 ns.

10. Procédé de détection de gaz au moyen d'un capteur de gaz photo-acoustique selon l'une des revendications précédentes, comprenant :

   - une étape dans laquelle le circuit d'alimentation génère le courant de base entre chaque impulsion avec une intensité non nulle et inférieure à l'intensité du courant de génération au cours des impulsions laser et le courant de génération pompant la ou les lasers, configuré pour faire fonctionner le ou les lasers en mode impulsionnel, ledit courant de base étant modulé en intensité de sorte que ladite ou chaque dite source laser émette, dans la cellule formant un résonateur acoustique, un rayonnement lumineux présentant une longueur d'onde variable de manière périodique autour d'une longueur d'onde centrale de manière à prendre, à des intervalles réguliers, une valeur spécifiquement adaptée à l'excitation d'un gaz à détecter, le courant électrique de génération étant modulé de manière à compenser une perte d'efficacité du ou des lasers produite par l'échauffement de la zone active du ou des lasers par le courant de base de manière à obtenir une intensité laser constante ; et
   - une étape de détection d'un signal photo-acoustique périodique, produit lors de l'interaction entre le gaz et le rayonnement laser, par le transducteur électro-acoustique du capteur.

11. Procédé selon la revendication précédente, dans lequel la fréquence de la variation périodique de la longueur d'onde laser est égale à la moitié de la fréquence de résonnance de la cellule.

12. Procédé l'une quelconque des revendications 10 à 11, dans lequel le capteur de gaz comprend plusieurs sources lasers de longueurs d'ondes centrales différentes, adaptées à l'excitation de gaz différents.

13. Procédé selon l'une quelconque des revendications 10 à 12, dans lequel le ou les sources lasers comprennent des lasers à cascade quantique émettant entre 4 et 10 microns.

**Patentansprüche**

1. Photoakustischer Gassensor (1, 2), Folgendes umfassend:

   - eine Zelle (20), die einen akustischen Resonator bildet, umfassend einen Gaseingangskanal, einen Gasausgangskanal (70) und mindestens eine Öffnung, die als Lasereingang (40) bezeichnet wird;
   - mindestens eine elektrisch gepumpte Laserquelle (10);
   - mindestens einen elektroakustischen Wandler (50); und
   - eine Stromversorgungsleitung (90), die einen gepulsten elektrischen Strom erzeugt, der als Erzeugungsstrom (31) bezeichnet wird, der die eine oder mehreren Laserquellen pumpt, der dafür konfiguriert ist, die eine oder mehreren Laserquellen im gepulsten Modus zu betreiben, wobei die Wiederholungsfrequenz der Laserimpulse mindestens 10-mal, vorzugsweise 100-mal, weiter bevorzugt 1000-mal höher als die Resonanzfrequenz der Zelle ist,

   **dadurch gekennzeichnet, dass** die Stromversorgungsleitung dafür konfiguriert ist, ferner einen Strom, der als Basisstrom (34) bezeichnet wird, zu erzeugen, der Werte ungleich Null zwischen Laserimpulsen mit einer geringeren Intensität als die Intensität des Erzeugungsstroms während der Laserimpulse (35) annimmt, wobei der Basisstrom in seiner Intensität derart moduliert wird, dass die eine oder mehreren Laserquellen eine Lichtstrahlung mit einer Wellenlänge in die Zelle ausstrahlen, die periodisch um eine mittlere Wellenlänge variiert, so dass sie in regelmäßigen Intervallen einen Wert annimmt, der speziell für die Erregung eines zu erkennenden Gases geeignet ist, wodurch eine Interaktion zwischen der Lichtstrahlung und dem zu erkennenden Gas, das in der Zelle enthalten ist, die Erzeugung von akustischen Wellen mit einer Resonanzfrequenz der Zelle induziert, wobei der elektroakustische Wandler derart angeordnet ist, dass er mit den in der Zelle erzeugten akustischen Wellen in Kontakt steht.

2. Gassensor nach Anspruch 1, wobei die Modulation des Basisstroms sinusförmig ist.

3. Gassensor nach einem der vorhergehenden Ansprüche, wobei die Intensität des Basisstroms, der von der Stromversorgungsleitung erzeugt wird, unter der Laseremissionsschwelle liegt.

4. Gassensor nach einem der vorhergehenden Ansprüche, wobei die Modulation des Basisstroms vom PWM-Typ (für Pulsweitenmodulation) oder vom PDM-Typ (für Pulsdichtenmodulation) ist.

5. Gassensor nach einem der vorhergehenden Ansprüche, wobei der elektrische Erzeugungsstrom in seiner Intensität derart moduliert wird, dass ein Verlust der Wirksamkeit des einen oder der mehreren Laser, der durch Erwärmung der aktiven Zone des einen oder der mehreren Laser durch den Basisstrom verursacht wird, so ausgeglichen wird, dass eine konstante Laserintensität erhalten wird.

6. Gassensor nach einem der vorhergehenden Ansprüche, wobei der Basisstrom periodisch mit einer Frequenz gleich der Hälfte der Resonanzfrequenz der Zelle moduliert wird.

7. Gassensor nach einem der vorhergehenden Ansprüche, umfassend mehrere Laserquellen mit unterschiedlichen mittleren Wellenlängen, die für die Erregung von unterschiedlichen Gasen geeignet sind.

8. Gassensor nach einem der vorhergehenden Ansprüche, wobei die eine oder mehreren Laserquellen Quantenkaskadenlaser umfassen, die mit Wellenlängen zwischen 4 und 10 $\mu$m ausstrahlen.

9. Gassensor nach einem der vorhergehenden Ansprüche, wobei die Dauer der Laserimpulse unter 100 ns liegt.

10. Verfahren zur Erkennung von Gas mittels eines photoakustischen Gassensors nach einem der vorhergehenden Ansprüche, Folgendes umfassend:

    - einen Schritt, in dem die Stromversorgungsleitung den Basisstrom zwischen jedem Impuls mit einer Intensität, die ungleich Null und geringer als die Intensität des Erzeugungsstroms während der Laserimpulse ist, erzeugt, und der Erzeugungsstrom, der den oder die Laser pumpt, dafür konfiguriert ist, den oder die Laser im gepulsten Modus zu betreiben, wobei der Basisstrom in seiner Intensität derart moduliert wird, dass die Laserquelle oder jede Laserquelle in die Zelle, die einen akustischen Resonator bildet, eine Lichtstrahlung mit einer Wellenlänge ausstrahlt, die periodisch um eine mittlere Wellenlänge variiert, so dass sie in regelmäßigen Intervallen einen Wert annimmt, der speziell für die Erregung eines zu erkennenden Gases geeignet ist, wobei der elektrische Erzeugungsstrom derart moduliert wird, dass ein Verlust der Wirksamkeit des einen oder der mehreren Laser, der durch Erwärmung der aktiven Zone des einen oder der mehreren Laser durch den Basisstrom erzeugt wird, so ausgeglichen wird, dass eine konstante Laserintensität erhalten wird; und
    - einen Schritt zum Erkennen eines photoakustischen periodischen Signals, das bei der Interaktion zwischen dem Gas und dem Laserstrahl durch den elektroakustischen Wandler des Sensors erzeugt wird.

11. Verfahren nach dem vorhergehenden Anspruch, wobei die Frequenz der periodischen Variation der Laserwellenlänge gleich der Hälfte der Resonanzfrequenz der Zelle ist.

12. Verfahren nach einem der Ansprüche 10 bis 11, wobei der Gassensor mehrere Laserquellen mit unterschiedlichen mittleren Wellenlängen, die für die Erregung von unterschiedlichen Gasen geeignet sind, umfasst.

13. Verfahren nach einem der Ansprüche 10 bis 12, wobei die eine oder mehreren Laserquellen Quantenkaskadenlaser umfassen, die zwischen 4 und 10 $\mu$m ausstrahlen.

**Claims**

1. A photo-acoustic gas sensor (1, 2) comprising:

    - a cell (20) forming an acoustic resonator, comprising a gas inlet duct, a gas outlet duct (70) and at least one aperture called the laser inlet (40);
    - at least one electrically pumped laser source (10);
    - at least one electro-acoustic transducer (50); and
    - a supply circuit (90) that generates a pulsed electric current, called the generation electric current (31), that pumps the one or more laser sources and configured to cause the one or more laser sources to operate in pulsed mode, the repetition frequency of the laser pulses being at least 10 times, preferably 100 times, more preferably 1000 times higher than the resonant frequency of the cell,

**characterised in that** the supply circuit is configured to further generate a current, called the base current (34), that takes non-zero values between laser pulses with an intensity lower than the intensity of the generation current during the laser pulses (35), the intensity of the base current being modulated so that the one or more laser sources emit, into the cell, light radiation having a wavelength that varies periodically about a central wavelength so as to take, at regular intervals, a value specifically suited for excitation of a gas to be detected, whereby an interaction between the light radiation and the gas to be detected contained in the cell induces the generation of acoustic waves at a resonant frequency of the cell, the electro-acoustic transducer being arranged so as to be in contact with the acoustic waves generated in the cell.

2. The gas sensor according to claim 1, wherein the modulation of the base current is sinusoidal.

3. The gas sensor according to any one of the preceding claims, wherein the intensity of the base current generated by the supply circuit is lower than the laser-emission threshold.

4. The gas sensor according to any one of the preceding claims, wherein the modulation of the base current is of PWM type (for Pulse Width Modulation) or of PDM type (for Pulse Density Modulation).

5. The gas sensor according to any one of the preceding claims, wherein the intensity of the generation electric current is modulated so as to compensate for a loss of efficiency of the one or more lasers caused by heating of the active region of the one or more lasers by the base current, so as to obtain a constant laser intensity.

6. The gas sensor according to any one of the preceding claims, wherein the base current is periodically modulated at a frequency equal to half the resonant frequency of the cell.

7. The gas sensor according to any one of the preceding claims, comprising multiple laser sources of different central wavelengths, suitable for the excitation of different gases.

8. The gas sensor according to any one of the preceding claims, wherein the one or more laser sources comprise quantum cascade lasers that emit at wavelengths comprised between 4 and 10 microns.

9. The gas sensor according to any one of the preceding claims, wherein the duration of the laser pulses is shorter than 100 ns.

10. A method for detecting a gas using a photo-acoustic gas sensor according to one of the preceding claims, comprising:

    - a step in which the supply circuit generates the base current between each pulse with an intensity that is non-zero and lower than the intensity of the generation current during the laser pulses and wherein the generation current, which pumps the one or more lasers, is configured to cause the one or more lasers to operate in pulsed mode, the intensity of said base current being modulated so that said or each said laser source emits, into the cell which forms an acoustic resonator, light radiation having a wavelength that varies periodically about a central wavelength so as to take, at regular intervals, a value specifically suited for the excitation of a gas to be detected, the generation electric current being modulated so as to compensate for a loss of efficiency of the one or more lasers caused by heating of the active region of the one or more lasers by the base current, so as to obtain a constant laser intensity; and
    - a step of detecting a periodic photo-acoustic signal, produced during the interaction between the gas and the laser radiation, using the electro-acoustic transducer of the sensor.

11. The method according to the preceding claim, wherein the frequency of the periodic variation of the laser wavelength is equal to half the resonant frequency of the cell.

12. The method according to any one of claims 10 to 11, wherein the gas sensor comprises multiple laser sources of different central wavelengths, suited for the excitation of different gases.

13. The method according to any one of claims 10 to 12, wherein the one or more laser sources comprise quantum cascade lasers that emit between 4 and 10 microns.

Fig. 1

Fig. 2

Fig. 3

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180196012 A1

**Littérature non-brevet citée dans la description**

- **J. SAARELA et al.** Wavelength modulation waveforms in laser photoacoustic spectroscopy. *Appl. Opt.,* 2009, vol. 48, 743-747

- **SAARELA et al.** *Applied Optics,* 2009